# EUROPÄISCHE PATENTSCHRIFT

(11) **EP 1 103 401 B1**
(45) Veröffentlichungstag und Bekanntmachung des Hinweises auf die Patenterteilung: **31.03.2004**
(21) Anmeldenummer: 00124189.2
(22) Anmeldetag: 08.11.2000
(51) Int. Cl.: B60J 7/12, B60J 7/185

(54) **Verstellbares Fahrzeugdach mit einem Faltverdeck**
Adjustable vehicle roof with a foldable soft top
Toit de véhicule ajustable avec un toit pliant

(30) Priorität: 26.11.1999 DE 19957012
(43) Veröffentlichungstag der Anmeldung: 30.05.2001
(73) Patentinhaber: CTS Fahrzeug-Dachsysteme GmbH, 21079 Hamburg (DE)
(72) Erfinder: Just, Jan, Michigan 48382 (US)
(74) Vertreter: Müller, Gottfried

(56) Entgegenhaltungen:
- EP-A- 0 303 018
- EP-A- 0 733 505
- DE-A- 19 820 711
- US-A- 5 026 110
- US-A- 5 772 275
- US-A- 5 816 644

## Beschreibung

Die Erfindung betrifft ein verstellbares Fahrzeugdach mit einem Faltverdeck gemäß dem Oberbegriff des Anspruches 1.

Aus der Druckschrift DE 41 23 516 C1 ist ein Faltverdeck bekannt, das eine Mehrzahl von dem Verdeckgestänge zuzuordnenden Dachrahmen, Bügel sowie Spriegel umfasst, wobei das Verdeckgestänge mit Hilfe einer Verstellkinematik zwischen einer den Fahrzeuginnenraum überdeckenden Schließstellung und einer den Fahrzeuginnenraum freigebenden Ablagestellung verstellbar ist, in welcher das Faltverdeck in einem Stauraum hinter der Fahrgastzelle abgelegt ist. Um sicher zu stellen, dass der Verdeck-Bezugstoff des Faltverdecks in Schließstellung unter Spannung steht und am Verdeckgestänge aufliegt, ist im rückwärtigen Bereich des Fahrzeugdaches ein Stoffhaltebügel vorgesehen, welcher in Schließstellung des Verdecks auf dem den Stauraum überdeckenden Verdeckkastendeckel aufliegt. Der Stoffhaltebügel ist mit dem Verdeck-Bezugstoff verbunden und beaufschlagt den Bezugstoff mit einer den Stoff straffenden Spannung. Um zu verhindern, das der Stoffhaltebügel als Reaktion der Stoffspannung in Schließstellung vom Verdeckkastendeckel abhebt, wird der Stoffhaltebügel mittels einer Verschlussvorrichtung in Schließstellung an der Fahrzeugkarosserie in seiner auf dem Verdeckkastendeckel aufliegenden Position gehalten. Die Verschlussvorrichtung besteht aus einem Schnappverschluss, der in Schließstellung des Verdecks eine Verriegelung des Stoffhaltebügels mit dem Verdeckkastendeckel bewirkt. Um bei der Überführungsbewegung des Faltverdecks von Schließ- in Ablagestellung den Stoffhaltebügel aufstellen zu können und den Verdeckkastendeckel öffnen zu können, kann der Schnappverschluss mit Hilfe eines elektromotorischen Stellantriebs entriegelt werden.

Derartige Verschlussvorrichtungen zwischen Stoffhaltebügel und einem karosserieseitigen Bauteil zeichnen sich zwar durch eine hohe Kraftübertragung und dementsprechend sichere Verriegelung zwischen Bügel und Fahrzeugkarosserie aus, wodurch die Möglichkeit gegeben ist, dem Faltverdeck in Schließstellung eine hohe Spannung aufzuprägen. Die Verschlussvorrichtung umfasst aber eine Mehrzahl von Bauteilen, die ferngesteuert betätigt werden müssen, wobei die Funktionen der Verschlussvorrichtung sowie der Verstellkinematik des Fahrzeugverdecks koordiniert werden müssen. Ein weiteres Problem besteht darin, das insbesondere in der Ablagestellung des Faltverdecks die fahrzeugseitigen Verschlussvorrichtungen in den Sichtbereich treten und das Gesamterscheinungsbild des Fahrzeuges beeinträchtigen können.

Aus der gattungsbildenden Druckschrift DE 297 12 706 U1 ist ein Faltverdeck bekannt, dessen Verdeck-Bezugsstoff mittels eines Stoffhaltebügels in Schließstellung des Verdecks unter Spannung gehalten wird, wobei der Stoffhaltebügel von einem Spannspriegel beaufschlagt wird, in den eine Gelenkanordnung eingebracht ist, die in Schließstellung des Verdecks eine Übertotpunktlage einnimmt.

Die Übertotpunktlage sorgt zwar für eine stabile Stellung des Spannspriegels in Schließposition des Fahrzeugdaches. Die stabile Stellung kann jedoch nur aufrecht erhalten werden, solange auf die Gelenkanordnung im Spannspriegel keine unzulässig hohen Störkräfte wirken, die beispielsweise durch Fahrtwind bei höheren Geschwindigkeiten entstehen können und insbesondere durch ein verschleißbedingtes Spiel in der Gelenkanordnung verstärkt werden können. Bei dieser Anordnung besteht daher immer die Gefahr, dass der Spannspriegel versehentlich in seiner Gelenkanordnung einknickt.

Der Erfindung liegt das Problem zu Grunde, das Faltverdeck des gattungsgemäßen Fahrzeugdaches in Schließstellung wind- und wasserdicht abzuschließen, wobei die Form der Fahrzeugkarosserie möglichst frei gestaltbar sein soll.

Dieses Problem wird erfindungsgemäß mit den Merkmalen des Anspruches 1 gelöst.

Gemäß dem neuartigen Fahrzeugdach ist vorgesehen, dass der Stoffhaltebügel, welcher Teil des Verdeckgestänges ist und in Schließstellung des Faltverdecks auf dem rückwärtigen karosserieseitigen Bauteil des Fahrzeugs aufliegt, mit Hilfe eines Finnen- bzw. Spannspriegels in seiner auf dem Karosserie-Bauteil aufliegenden Position gehalten wird, so dass einerseits die auf den Stoffhaltebügel wirkende Stoffspannung den Stoffhaltebügel nicht von seiner Position auf dem Karosserie-Bauteil zu lösen vermag und andererseits eine ausreichend hohe Stoffspannung mit Hilfe des Stoffhaltebügels erzeugt werden kann. Der Spannspriegel stützt sich hierbei am Verdeckgestänge ab, so dass keine zusätzlichen Verbindungen, insbesondere keine verschlusselemente, zur Fahrzeugkarosserie benötigt werden. Die Abstützung des Spannspriegels am Verdeckgestänge reicht für eine Stabilisierung des Stoffhaltebügels aus, so dass auf die Optik beeinträchtigende Verschlusselemente in der Fahrzeugkarosserie verzichtet werden kann, ohne die Funktion des Faltverdecks zu beeinträchtigen. Das Verdeckgestänge mit dem den Stoffhaltebügel stabilisierenden Spannspriegel bildet kräftemäßig ein in sich geschlossenes System, so dass die Fahrzeugkarosserie keine Spannkräfte für die Spannung des Faltverdecks aufnehmen muss.

Gemäß einer vorteilhaften Ausführung ist vorgesehen, dass der Spannspriegel sich in Schließstellung in Richtung des Fahrzeuglängsachse erstreckt. Das Verdeckgestänge entfaltet sich üblicherweise beim Schließen des Verdecks in Fahrzeuglängsrichtung und spannt hierbei zugleich den Bezugstoff des Verdecks. Der in Fahrzeuglängsrichtung ausgerichtete Spannspriegel kann hierbei in optimaler Weise Spannkräfte aufnehmen und den Stoffhaltebügel von diesen entlasten bzw. diesen stabilisieren.

Der Spannspriegel weist eine Gelenkanordnung mit zumindest einer Gelenkachse quer zur Fahrzeuglängsachse auf, wobei die Gelenkanordnung als Übertotpunkt-Kinematik ausgebildet ist. Der Spannspriegel wird in dieser Ausführung in Schließstellung des Verdecks in seine Übertotpunkt-Stellung belastet, um sicher zu stellen, dass der Spannspriegel unter der Stoffspannung nicht einknickt und versehentlich in Richtung der Ablagestellung verstellt wird. Die Übertotpunkt-Kinematik erlaubt es, den Spannspriegel mit einer verhältnismäßig geringen Kraft in Schließstellung des Verdecks in einer stabilen Position zu halten.

Weiterhin ist ein den Spannspriegel in Schließstellung beaufschlagendes Spannseil vorgesehen, das dem Spannspriegel in Schließstellung des Verdecks eine Haltekraft aufzwingt, um ein unbeabsichtigtes Zurückschnappen des Spannspriegels zu verhindern. Um Krafteinleitungen in die Fahrzeugkarosserie zu vermeiden, ist das Spannseil ausschließlich am Verdeckgestänge befestigt, so dass ein auf das Verdeckgestänge beschränkter Kräftekreislauf realisiert wird. Das dem Stoffhaltebügel abgewandte Ende des Spannseils wird über eine Zugfeder an einem Bügel oder einem sonstigen, dem Verdeckgestänge zuzuordnenden Bauteil gehalten. Über die Zugfeder kann ein elastisch nachgiebiges Verhalten des Spannseils realisiert werden, zudem ist eine präzise Einstellung der den Spannspriegel in Schließstellung beaufschlagenden Haltekraft möglich.

Weitere Vorteile und zweckmäßige Ausführungsformen sind den weiteren Ansprüchen, der Figurenbeschreibung und den Zeichnungen zu entnehmen. Es zeigen:
- Fig. 1: eine Seitenansicht auf einen in Spannstellung dargestellten Spannspriegel in einem Fahrzeugdach, der einen Stoffhaltebügel in Schließstellung beaufschlagt, wobei der Spannspriegel über ein Zugseil mit einem Bügel des Verdeckgestänges verbunden ist.
- Fig. 2: den Spannspriegel in einer Ansicht von oben,
- Fig. 3: eine Fig. 1 entsprechende Ansicht mit einer Darstellung eines Dachrahmens, der Teil des Verdeckgestänges ist und an dem der Spannspriegel drehbar gelagert ist,
- Fig. 4: eine perspektivische Darstellung des Spannspriegels in einer der Verdeck-Schließstellung entsprechenden Streckstellung,
- Fig. 5: eine perspektivische Darstellung des Spannspriegels in einer der Verdeck-Ablagestellung entsprechenden Zwischenstellung.

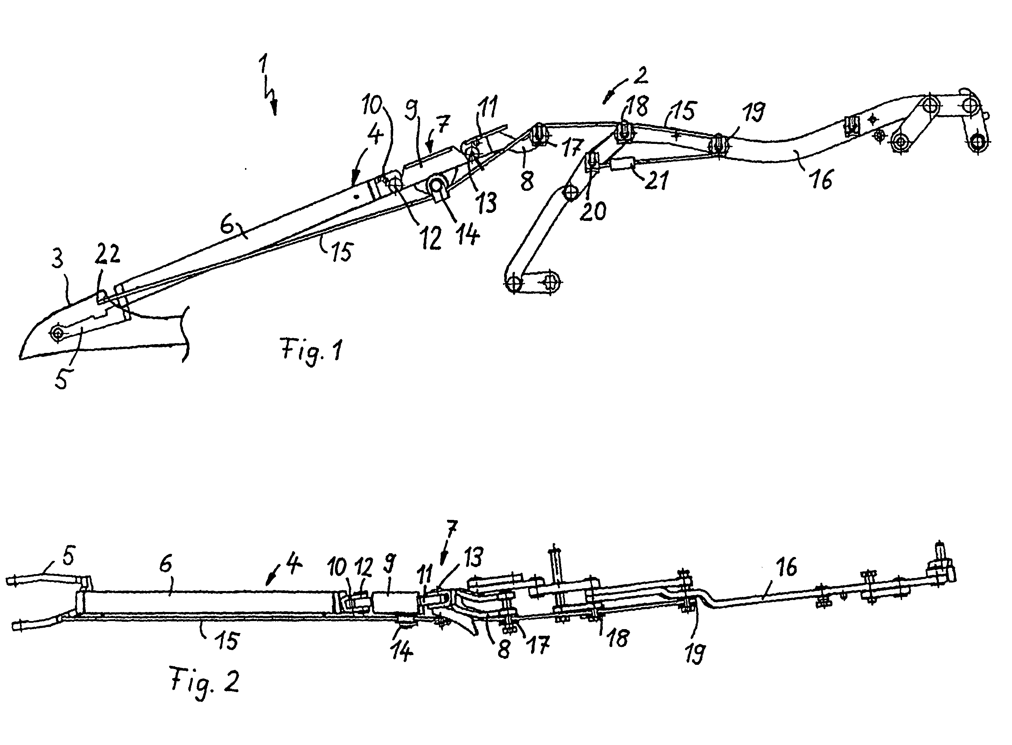

Bei den in den Fig. 1 bis 5 dargestellten Ausführungsbeispielen sind gleiche Bauteile mit gleichen Bezugszeichen versehen.

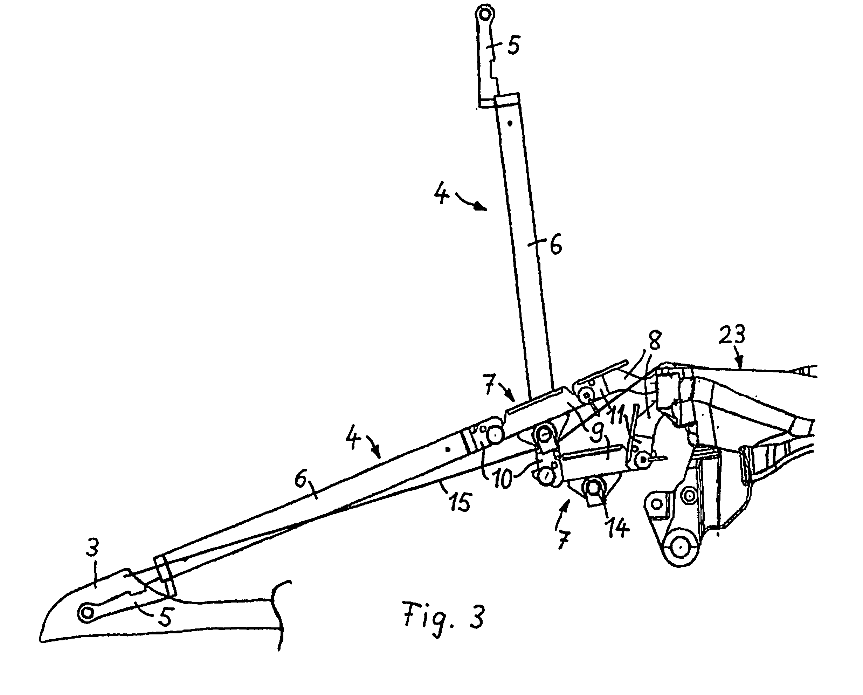

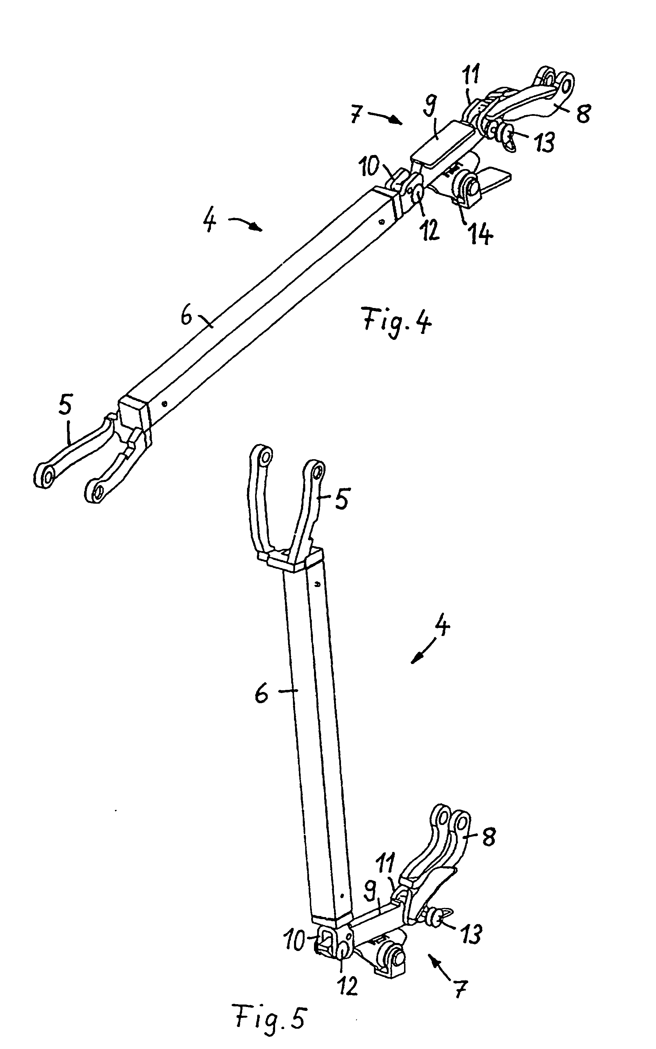

In Fig. 1 ist ein Ausschnitt aus einem verstellbaren Fahrzeugdach dargestellt, welches als Faltverdeck mit einem Verdeckgestänge 2 ausgebildet ist, auf dem ein Verdeck-Bezugstoff aufgespannt ist. Das Faltverdeck ist zwischen der in Fig. 1 dargestellten Schließstellung und einer Ablagestellung verstellbar, in der das Verdeckgestänge einschließlich dem Verdeckbezugstoff in einem Stauraum abgelegt ist. Um sicher zu stellen, dass in Schließstellung der Verdeck-Bezugstoff eine ausreichende Stoffspannung aufweist, welche gewährleistet, dass der Verdeckbezugstoff fest am Verdeckgestänge anliegt und ein wind- und wasserdichter Abschluss zur Fahrzeugkarosserie gegeben ist, ist im rückwärtigen Bereich des Faltverdecks ein querverlaufender Stoffhaltebügel 3 vorgesehen, der sich quer zur Fahrzeuglängsrichtung erstreckt und den hinteren Abschnitt des Bezugstoffs nach unten in Richtung der Fahrzeugkarosserie gespannt hält. Der Stoffhaltebügel 3 ist Teil des Verdeckgestänges 2 und weist lediglich eine Anbindung an einen Spannspriegel 4 auf, jedoch keine Anbindung zu einem karosserieseitigen Bauteil, was zur Folge hat, das die Karosserieverkleidung, auf der der Stoffhaltebügel in Schließstellung des Fahrzeugverdecks aufliegt, keine Spann- oder Haltekräfte des Verdecks aufnehmen muss. Der Spannspriegel 4 besteht, wie insbesondere auch den Fig. 4 und 5 zu entnehmen ist, aus einem stirnseitigen, mit dem Stoffhaltebügel 3 verbundenen unteren Befestigungsbügel 5, einem sich daraus anschließenden Übertragungsabschnitt 6, einer Gelenkanordnung 7 sowie einem oberen, dem Verdeck zugewandtem Befestigungsbügel 8, über den die Verbindung zum übrigen Verdeckgestänge hergestellt wird. Der obere Befestigungsbügel 8 des Spannspriegels 4 ist im Bereich seiner Stirnseite mit einem Dachrahmen 23 (siehe Fig. 3) gelenkig verbunden, der Teil des Verdeckgestänges des Faltverdeckes ist.

Die Gelenkanordnung 7 umfasst einen zentralen, mittleren Abschnitt 9, an den sich zwei seitliche Abschnitte 10 und 11 gelenkig anschließen, wobei die Gelenkachsen 12, 13 zwischen dem zentralen und den seitlichen Abschnitten 9 bzw. 10, 11 quer zur Fahrzeuglängsrichtung verlaufen. Der Spannspriegel 4 erstreckt sich in Fahrzeuglängsrichtung, bei einer Bewegung des Spannspriegels 4 um die Gelenkachsen 12, 13 wird der Spannspriegel aus der in Fig. 1 dargestellten Spannstellung, die der Schließstellung des Faltverdecks entspricht, in die in Fig. 3 und Fig. 5 dargestellte Zwischenstellung versetzt.

Weiterhin ist am Spannspriegel 4 ein Zugseil 15 geführt, welches an einem Ende über einen Befestigungspunkt 22 mit dem Stoffhaltebügel 3 fest verbunden ist und an seinem gegenüberliegenden Ende an einem Bügel 16 befestigt ist, welcher Teil des Verdeckgestänges des Faltverdeckes ist. Der Bügel 16 ist über eine nichtdargestellte Kinematik mit dem Dachrahmen 23 (Fig. 3) verbunden. Im Bereich des Spannspriegels 4 ist das Zugseil 15 um eine Seilrolle 14 auf der Unterseite des zentralen Gelenkabschnitts 9 der Gelenkanordnung 7 und um eine weitere Seilrolle 17 geführt, die an dem oberen Befestigungsbügel 8 befestigt ist, der an dem seitlichen Abschnitt 11 gehalten ist, welcher auf der dem Bügel 16 zugewandten Seite des Spannspriegels 4 angeordnet ist. Am Bügel 16 sind zwei weitere Seilrollen 18, 19 vorgesehen, über die das Zugseil eine Richtungsumlenkung zu seinem Befestigungspunkt 20 am Bügel 16 erfährt. Unmittelbar vor dem Befestigungspunkt 20 ist in das Zugseil 15 eine Zugfeder 21 integriert.

In Schließstellung des Faltverdecks wird der Stoffhaltebügel 3 über den Spannspriegel 4 nach unten gedrückt. Der Spannspriegel 4 wird hierbei über das gespannte Zugseil 15 in seiner Spanstellung gehalten. Um eine versehentliches und unbeabsichtigtes Verschwenken um die Gelenkachsen 12 und 13 zu verhindern, was ein Zuklappen des Spannspriegels 4 in die in Fig. 5 gezeigte Stellung zur Folge hätte, ist die Gelenkanordnung 7 als Übertotpunkt-Kinematik ausgebildet, die in Schließstellung des Spannspriegels durch das Zugseil 15 in ihre Übertotpunkt-Stellung beaufschlagt wird. Die auf der Unterseite des zentralen Gelenkabschnitts 9 gehaltene Seilrolle 14 weist quer zur Längsachse des Spannspriegels 4 einen Abstand sowohl zum Befestigungspunkt 22 des Spannseils am Stoffhaltebügel 3 als auch zur oberen Seilrolle 17 am oberen Befestigungsbügel 8 auf. Auf Grund dieses Querabstandes sowie der gegenläufigen Umlenkung um die Seilrollen 14 und 17 entsteht bei einer Spannung des Zugseils 15 eine Kraftkomponente quer zur Längsachse des Spannriegels 4 auf die seitlichen Gelenkabschnitte 10, 11, die diese Gelenkabschnitte in die Übertotpunkt-Stellung beaufschlagt.

Wird die Seilspannung gelöst, so kann die Gelenkanordnung 7 ihre Übertotpunkt-Stellung verlassen und um die Gelenkachsen 12 und 13 kippen; hierdurch nimmt der Spannspriegel 4 seine Beugestellung ein, siehe Fig. 5. Der Übergang von Spannstellung zu Beugestellung bzw. von Schließstellung des Faltverdecks zur Ablagestellung wird durch ein die Verdeckkinematik beaufschlagendes Stellglied ausgelöst.

Die Zugfeder 21, die in das Zugseil 15 integriert ist, erlaubt in Spannstellung ein begrenzt elastisches Verhalten des Zugseils 15.

## Patentansprüche

1. Verstellbares Fahrzeugdach, das ein zwischen einer Schließstellung und einer Ablagestellung verstellbares Faltverdeck mit einem Verdeckgestänge (2) und einem Verdeck-Bezugstoff aufweist, mit einem dem Verdeckgestänge (2) zugeordneten Stoffhaltebügel (3), der in Schließstellung des Faltverdecks auf einem rückwärtigen, karosserieseitigen Bauteil aufliegt und den Verdeck-Bezugstoff mit Spannung beaufschlagt, mit einem den Stoffhaltebügel (3) in Schließstellung beaufschlagenden Spannspriegel (4), der sich am Verdeckgestänge (2) abstützt und der eine Gelenkanordnung (7) mit zumindest einer Gelenkachse (12, 13) quer zur Fahrzeuglängsachse aufweist, wobei die Gelenkanordnung (7) als Übertotpunkt-Kinematik ausgebildet ist,
**dadurch gekennzeichnet,**
- **dass** in Schließstellung der Spannspriegel (4) mittels eines Spannseils, das ausschließlich am Verdeckgestänge (2) befestigt ist, in die Übertotpunkt-Stellung der Übertotpunkt-Kinematik belastet ist,
- **dass** das dem Stoffhaltebügel (3) abgewandte Ende des Spannseils über eine Zugfeder (21) an einem Bügel (16) des Verdeckgestänges (2) gehalten ist.

2. Fahrzeugdach nach Anspruch 1,
**dadurch gekennzeichnet,**
**dass** der Spannspriegel (4) sich in Schließstellung in Richtung der Fahrzeuglängsachse erstreckt.

3. Fahrzeugdach nach Anspruch 1 oder 2,
**dadurch gekennzeichnet,**
**dass** das dem Stoffhaltebügel (3) abgewandte Ende des Spannseils um eine Umlenkrolle geführt ist, die an einem Bügel (16) des Verdeckgestänges (2) gehalten ist.

## Claims

1. Adjustable vehicle roof which has a foldable soft top, which can be adjusted between a closed position and a folded-down position and has a soft-top linkage (2) and a soft-top fabric material, having a material-retaining bar (3) which is assigned to the soft-top linkage (2) and, in the closed position of the foldable soft top, rests on a rear component on the body and tensions the soft-top fabric material, having a tensioning bow (4) which acts upon the material-retaining bar (3) in the closed position, is supported on the soft-top linkage (2) and has a joint arrangement (7) with at least one joint axis (12, 13) transverse with respect to the longitudinal axis of the vehicle, the joint arrangement (7) being designed as dead-centre-exceeding kinematics,
**characterized**
- **in that**, in the closed position, the tensioning bow (4) is loaded into the dead-centre-exceeding position of the dead-centre-exceeding kinematics by means of a tensioning cable, which is fastened exclusively to the soft-top linkage (2), and
- **in that** that end of the tensioning cable which faces away from the material-retaining bar (3) is held on a bar (16) of the soft-top linkage (2) via a tension spring (21).

2. Vehicle roof according to Claim 1,
**characterized**
**in that**, in the closed position, the tensioning bow (4) extends in the direction of the longitudinal axis of the vehicle.

3. Vehicle roof according to Claim 1 or 2,
**characterized**
**in that** that end of the tensioning cable which faces away from the material-retaining bar (3) is guided about a deflection pulley which is held on a bar (16) of the soft-top linkage (2).

## Revendications

1. Toit de véhicule ajustable, qui présente une capote pliante déplaçable entre une position de fermeture et une position de rangement, avec une tringlerie de capote (2) et une toile de revêtement de capote, comprenant un étrier de fixation de la toile (3) associé à la tringlerie de capote (2), qui s'applique dans la position de fermeture de la capote pliante sur un composant arrière du côté de la carrosserie et qui sollicite en tension la toile de revêtement de la capote, comprenant un arceau de tensionnement (4) sollicitant l'étrier de fixation de la toile (3) dans la position de fermeture, lequel s'appuie sur la tringlerie de capote (2) et présente un agencement d'articulation (7) avec au moins un axe d'articulation (12, 13) transversal à l'axe longitudinal du véhicule, l'agencement d'articulation (7) étant réalisé sous forme de cinématique à point mort haut,
**caractérisé en ce que**
- dans la position de fermeture, l'arceau de tensionnement (4) est sollicité, au moyen d'un câble de tensionnement qui est fixé exclusivement sur la tringlerie de capote (2), dans la position de point mort haut de la cinématique à point mort haut,
- l'extrémité du câble de tensionnement opposée à l'étrier de fixation de la toile (3) est maintenue par le biais d'un ressort de traction (21) contre un étrier (16) de la tringlerie de capote (2).

2. Toit de véhicule selon la revendication 1,
**caractérisé en ce que**
l'arceau de tensionnement (4) s'étend dans la direction de l'axe longitudinal du véhicule dans la position de fermeture.

3. Toit de véhicule selon la revendication 1 ou 2,
**caractérisé en ce que**
l'extrémité du câble de tensionnement opposée à l'étrier de fixation de la toile (3) est guidée autour d'une poulie de renvoi qui est maintenue contre un étrier (16) de la tringlerie de capote (2) .
